# EUROPEAN PATENT APPLICATION

(11) **EP 4 607 607 A1**
(43) Date of publication of application: **27.08.2025**
(21) Application number: 23893654.6
(22) Date of filing: 10.11.2023
(51) Int. Cl.: H01M 4/36, H01M 4/485

(54) **HIGH-CAPACITY LONG-CYCLE LIFE LOW-COBALT SINGLE CRYSTAL POSITIVE ELECTRODE MATERIAL AND PREPARATION METHOD THEREFOR**

(30) Priority: 23.11.2022 CN 202211477877
(71) Applicant: BASF Shanshan Battery Materials Co., Ltd., Changsha, Hunan 410205 (CN)
(72) Inventor: ZHAO, Xiaokang, Changsha, Hunan 410205 (CN); LUO, Gui, Changsha, Hunan 410205 (CN); TAN, Xinxin, Changsha, Hunan 410205 (CN)
(74) Representative: Tansini, Elio Fabrizio
(86) International application number: PCT/CN2023/131020
(87) International publication number: WO 2024/109564

(57) **Abstract**

The present application belongs to the technical field of lithium battery positive electrode materials, and discloses a low-cobalt single crystal positive electrode material with high capacity and long cycle life. The interior of the particle is divided into a first region and a second region, and the cobalt concentrations in the first and second region are in a gradient distribution, decreasing from outside to inside at decreasing rates of 6% to 20% and 0.1% to 6% per 100 nm, respectively. This design can significantly improve the initial charge/discharge capacity and rate performance, and can significantly enhance the high-temperature cycling performance. The method for preparing the low-cobalt single crystal positive electrode material is also provided, which has a simple process and low cost. Through appropriate selection of small particles of high-nickel low-cobalt precursors, combined with element doping, coating modification, and dry sintering processes, the method can regulate particle size morphology and structure of the low-cobalt single crystal positive electrode material, and modify the crystal structure and the surface material, resulting in a two-tier decreasing cobalt concentration gradient distribution from the outside to the inside, which addresses the common issues of high-nickel low-cobalt positive electrode materials, such as high residual lithium content, poor power performance and cycling performance, and inferior safety performance.

## Description

### TECHNICAL FIELD

The present application belongs to the technical field of lithium battery positive electrode materials, and particularly relates to a low-cobalt single crystal positive electrode material with high capacity and long cycle life, and a preparation method thereof.

### BACKGROUND

To meet the demand for longer driving ranges in the new energy vehicle market, competition for high energy density performance has intensified, leading to significant advancements in high-energy lithium-ion batteries. In the race for energy density, ternary positive electrode materials are developed toward high-nickel and high-voltage, while also facing challenges such as poor cycle life and safety risks. In recent years, the price of raw material resources has increased significantly. As the ultimate goal of ternary positive electrode materials, high-nickel low-cobalt positive electrode materials possess notable advantages in energy density and cost, but they also face common issues, such as high residual lithium, poor rate performance and cycling performance.

Therefore, it is imperative to modify and develop high-nickel low-cobalt positive electrode materials to address the issues such as low capacity, poor cycle life, and safety risks.

### SUMMARY

The technical issue to be addressed by the present application is to overcome the shortcomings and deficiencies mentioned in the above background, so as to provide a low-cobalt single crystal positive electrode material with high capacity and long cycle life and a preparation method thereof.

To address the above-mentioned technical issues, the present application provides technical solutions as follows.

A low-cobalt single crystal positive electrode material with high capacity and long cycle life is provided, wherein through EPMA analysis of a particle of the low-cobalt single crystal positive electrode material, a region extending from 25 nm to 425 nm away from a particle surface is defined as a first region, and a region extending from 425 nm away from the particle surface to a particle center is defined as a second region;
wherein a cobalt concentration of the first region is in a gradient distribution, decreasing from outside to inside at a rate of 6% to 20% per 100 nm, and
a cobalt concentration of the second region is in a gradient distribution, decreasing from outside to inside at a rate of 0.1% to 6% per 100 nm.

According to element quantitative analysis by EPMA, in the low-cobalt single crystal positive electrode material of the present application, the cobalt concentration in the particle has a two-tier decreasing gradient distribution from outside to inside. To fully utilize cobalt's promoting effect on the lithium-ion diffusion rate, two regions with different cobalt concentration gradients are arranged from the surface to the interior, where the cobalt concentration gradient of the inner region is lower than the cobalt concentration gradient of the outer region. When the lithium-layer channels have a high lithium intercalation degree from the outside to the inside, exhibiting the lithium concentration gradient effect, the first region with the high cobalt concentration gradient greatly promotes entry of lithium ions into the crystal lattice and lithium ion diffusion into the interior, which alleviates the irreversible H2-H3 phase transition in the high-nickel low-cobalt material, while mitigating the high polarization impedance caused by the high lithium intercalation degree within the crystal. In the second region with the low cobalt concentration gradient, due to the low lithium concentration in the lithium layers at the center of the crystal, the relatively long diffusion paths of lithium ions, and the reduced number of lithium-layer channels, the cobalt's promoting effect on lithium-ion diffusion rate gradually decreases with decreasing lithium concentration. In view of the low concentration gradient of lithium ions in the second region, the second region with a low cobalt concentration gradient and a high nickel component is designed to further accelerate the intercalation of lithium ions and redox reaction, which alleviates the irreversible H1-M phase transition in the high-nickel low-cobalt material, and further mitigates the high polarization impedance caused by the high lithium intercalation degree within the crystal. As a result, the capacity exploitation at low voltages can be improved, thereby achieving a relatively high capacity. Moreover, the cobalt's promoting effect can be efficiently exerted, improving the capacity while reducing the overall cost of the low-cobalt material. This two-tier cobalt concentration gradient design highly complies with the lithium-layer channels and the lithium concentration gradient effect, thereby greatly improving the intercalation speed of lithium ions during discharge. Thus, the two-tier cobalt concentration gradient design is very suitable for being used in low-cobalt single crystal materials, as it can mitigate the high polarization impedance caused by long diffusion paths and slow diffusion rates of low-cobalt single crystal materials, alleviate the irreversible H1-M and H2-H3 phase transitions in high-nickel low-cobalt materials, reduce the power loss during cycling, thereby improving the cycling performance of the materials. In addition, the two-tier cobalt concentration gradient design can make full use of the cobalt's promoting effect, exhibiting significant comprehensive cost advantage.

In the low-cobalt single crystal positive electrode material, preferably, a ratio of a cobalt concentration decreasing rate in the first region to that in the second region is in a range from 3:1 to 8:1. Under the above ratio condition, in the internal structure of the low cobalt material, the limited cobalt content is in a two-tier decreasing gradient distribution, which fully utilizes cobalt's promoting effect on the lithium-ion diffusion rate, thereby accelerating the intercalation of lithium ions during discharge. Meanwhile, in view of the diffusion paths in lithium layers of a spherical single crystal, especially in the later stage of discharge, when the lithium-layer channels have a high lithium intercalation degree from the outside to the inside, exhibiting the lithium concentration gradient effect, the first region with the high cobalt concentration gradient greatly promotes entry of lithium ions into the crystal lattice, which mitigates the high polarization impedance caused by the high lithium intercalation degree within the crystal, further accelerating the intercalation of lithium ions, thereby exhibiting a relatively high capacity.

Preferably, the low-cobalt single crystal positive electrode material is represented by a general formula LiᵤNi_{1-x-y-z}CoₓMn_{y}M_{z}NᵥO_{2-w}, where 0.9≤u≤1.1, 0<x≤0.10, 0<y≤0.1, 0≤z≤0.05, 0≤v≤0.05, -0.05≤w≤0.05, M is a doping element selected from the group consisting of Al, Mg, Zr, Ti, Y, W, Ta, Nb, Ce, Sn, B, Sr, Mo, and any combination thereof, and N is a coating element selected from the group consisting of B, Ce, Nb, Sn, W, Al, Zr, and any combination thereof.

More preferably, M is Zr. The high-temperature co-doping of Zr-Co elements enables Zr to promote the stacking growth of primary particles, forming a stable crystal structure (Zr-O strong bond). Meanwhile, Zr and Co sources can react with residual lithium on the particle surface to form fast-ion conductors Li₂ZrO₃ and LiCoO₂, which improve the diffusion rate of lithium ions, protect the surface of the positive electrode material, and suppress side reactions between the surface of the positive electrode material and the electrolyte, thereby improving the cycling stability of the material.

Preferably, in an XRD diffraction pattern of the low-cobalt single crystal positive electrode material, a full width at half maximum of peak 104 is in a range from 0.08 to 0.10, and a lithium-nickel mixing obtained from refinement against the XRD diffraction pattern is in a range from 1.8% to 2.5%. The relatively narrow diffraction peak indicates good crystallinity of the material, and the relatively low lithium-nickel mixing can increase the lithium-ion diffusion rate, which is beneficial to alleviating the unfavorable phase transition during cycling and improving the structural stability.

Preferably, the low-cobalt single crystal positive electrode material has a D50 particle size ranged from 3.0 µm to 4.0 µm, a crystal particle size of primary particles ranged from 1.5 µm to 2.0 µm, a specific surface area ranged from 0.4 m²/g to 0.8 m²/g, and a total residual lithium content ranged from 800 ppm to 1400 ppm.

Preferably, a dQ/dV discharge curve of the low-cobalt single crystal positive electrode material at 0.1 C rate includes a raised reduction peak at 3.4 V to 3.6 V, indicating that the material has relatively high kinetic diffusion rate, relatively low polarization internal resistance, and reduced power loss, thereby exhibiting high capacity and improved cycling performance.

As part of a general inventive concept, the present application further provides a method for preparing the above-described low-cobalt single crystal positive electrode material, including the following steps:
S1: uniformly mixing a nickel-based hydroxide precursor, a lithium salt, a cobalt source, and a dopant, and performing two-stage sintering, wherein temperature of the first stage sintering is higher than temperature of the second stage sintering; and
S2: pulverizing and dissociating a sintered product obtained from the two-stage sintering in step S1, then uniformly mixing with a coating agent, and performing additional sintering to obtain the low-cobalt single crystal positive electrode material.

In step S1, the first stage sintering is at an ultra-high and narrow temperature plateau, promoting the entry of the cobalt source into the internal structure of the particles to form the first region with the higher cobalt concentration gradient. Then, the second stage sintering is performed at a high-temperature plateau, promoting further crystalline growth of the particles, while forming the cobalt concentration gradient within the matrix. Such sintering protocol allows the cobalt source to diffuse faster in the first stage and slower in the second stage, thus forming a differentiated concentration gradient.

In the above method, preferably, the lithium salt is one or two of lithium carbonate, lithium hydroxide, lithium nitrate, lithium fluoride, and lithium phosphate; the cobalt source is one or two of cobalt hydroxide, cobalt oxyhydroxide, and tricobalt tetroxide; the dopant is an M salt, which is a compound containing one or multiple elements selected from the group consisting of Al, Mg, Zr, Ti, Y, W, Ta, Nb, Ce, Sn, B, Sr, and Mo; the coating agent is an N salt, which is a compound containing one or multiple elements selected from the group consisting of B, Ce, Nb, Sn, W, Al, and Zr; and a molar ratio of element lithium in the lithium salt to a nickel-cobalt-manganese hydroxide precursor is in a range from 1.05:1 to 1.08:1.

More preferably, the dopant is a compound containing one or multiple elements selected from the group consisting of Al, Mg, Zr, Ti, and Y, the coating agent is a compound containing one or multiple elements selected from the group consisting of B, Nb, W, Al, and Zr.

Preferably, in step S1, the two-stage sintering are performed at following conditions: the first stage sintering is performed at a temperature in a range from 800 °C to 1000 °C at a heating rate in a range from 1 °C/min to 3 °C/min for a temperature-holding period in a range from 2 hours to 5 hours; the second stage sintering is performed at a temperature in a range from 600 °C to 800 °C, for a temperature-holding period in a range from 8 hours to 20 hours; and the two-stage sintering is performed in an oxygen-containing atmosphere;
in step S2, the additional sintering is performed at a temperature in a range from 200 °C to 700 °C at a heating rate in a range from 1 °C/min to 3 °C/min for a temperature-holding period in a range from 4 hours to 10 hours, and the additional sintering is performed in an oxygen-containing atmosphere.

Preferably, pulverizing and dissociating in step S2 specifically includes the following steps: initially crushing the sintered product with a jaw crusher and a double roll crusher in sequence, and then pulverizing with a jet mill at an air pressure ranged from 0.2 MPa to 0.4 MPa, a sorting frequency ranged from 30 Hz to 50 Hz, and an air-intake frequency ranged from 30 Hz to 50 Hz.

Compared with the prior art, the present application has the following beneficial effects:
(1) In the low-cobalt high-nickel positive electrode material of the present application, the cobalt concentration in the particle has a two-tier decreasing gradient distribution from the outside to the inside, which can significantly improve the initial charge/discharge capacity and rate performance, and can significantly improve the high-temperature cycling performance, largely addressing the common issues associated with low-cobalt high-nickel materials in the industry, such as high residual lithium content, poor rate performance and cycling performance, and inferior safety performance.
(2) The preparation method of the present application adopts suitable surface coating elements and a dry sintering process, and the surface coating elements can react with residual lithium on the surface of the material, which reduces residual lithium and forms a thin and uniform coating layer on the surface of the material, addressing the common issue of high residual lithium content in high-nickel materials, while avoiding surface structure damage caused by water washing processes used to remove residual lithium. The method can establish lithium-ion transfer channels while fixing oxygen atoms on the surface, thereby suppressing side reactions between the surface of the material and the electrolyte, and consequently enhancing the rate performance and cycling performance of the material.
(3) The preparation method of the present application adopts an appropriate pulverization process to control the dissociation effect on the single-crystal particles, and ensures the integrity of the single-crystal particles during dissociation, forming uniformly dispersed particles with a narrow size distribution, improving the particle dispersity, yielding a relatively narrow particle size range, and thereby improving the consistency of the material.
(4) The preparation method of the present application is overall simple and has a low cost. Through appropriate selection of small particles of high-nickel low-cobalt precursors, combined with element doping, coating modification, and dry sintering processes, the method can regulate the internal nickel-cobalt-manganese composition, particle size morphology, and structure of the ternary low-cobalt single crystal positive electrode material, and modify the crystal structure and the material surface, resulting in a two-tier decreasing cobalt concentration gradient distribution from the outside to the inside, which addresses the common issues of high-nickel low-cobalt positive electrode materials, such as high residual lithium content, poor power performance and cycling performance, and inferior safety performance. The method alleviates the irreversible H1-M (low-voltage dynamics) and H2-H3 phase transitions in the high-nickel low-cobalt material and enhances mechanical strength of the material. The resulting material maintains high capacity and long cycle life while demonstrating excellent power performance and stable crystal structure, leading to high safety, high capacity, and long cycle life of batteries, meeting the safety and high-performance requirements of long-range premium vehicle models. Additionally, the resulting material offers a significant advantage in comprehensive cost, making it particularly suitable for being used in automotive batteries for long-range electric vehicles (EV).

### BRIEF DESCRIPTION OF THE DRAWINGS

In order to illustrate the technical solutions in the embodiments of the present application and the prior art more clearly, the drawings used in the embodiments or the prior art will be described briefly. Apparently, the following described drawings are merely for some embodiments of the present application, and other drawings can be derived by those of ordinary skill in the art according to these drawings without any creative effort.
FIG. 1 shows a scanning electron microscopic (SEM) image of a low-cobalt high-nickel positive electrode material with high capacity and long cycle life prepared in Example 1.
FIG. 2 shows an EPMA mapping of a cross-section of the low-cobalt high-nickel positive electrode material with high capacity and long cycle life prepared in Example 1.
FIG. 3 shows an SEM image of a low-cobalt high-nickel positive electrode material with high capacity and long cycle life prepared in Example 2.
FIG. 4 shows a graph of dQ/dV curves of positive electrode materials prepared in Example 1 and Comparative Example 1.
FIG. 5 shows a graph of high-temperature cycling performance of the positive electrode materials prepared in Example 1 and Comparative Example 1.

### DETAILED DESCRIPTION

To facilitate the understanding of the present application, the present application will be described more comprehensively and specifically below in conjunction with the drawings and embodiments. However, the scope of protection of the present application is not limited to the specific embodiments described below.

Unless otherwise defined, all technical terms used in the following description have meanings commonly understood by those skilled in the art. The terms used in the specification of the present application herein are for the purpose of describing specific embodiments only and are not intended to limit the scope of protection of the present application.

Unless otherwise specifically stated, raw materials, reagents, instruments, and equipment used in the present application are commercially available or prepared by the existing methods.

### Example 1

A low-cobalt single crystal positive electrode material with high capacity and long cycle life was prepared, which is represented by a chemical formula Li_{1.0}Ni_{0.929}Co_{0.030}Mn_{0.039}Zr_{0.002}B_{0.0005}Al_{0.002}O₂, and consists of small single-crystal primary particles, where the D50 particle size is 3.5 µm, the crystal particle size of the primary particles is 1.7 µm, the specific surface area is 0.65 m²/g, the total residual lithium content is 1189 ppm, the full width at half maximum of the XRD diffraction peak 014 is 0.082, and the lithium-nickel mixing obtained from XRD refinement is 1.82%.

The preparation method included the following steps:
1) The purchased nickel-cobalt-manganese hydroxide precursor Ni_{0.95}Co_{0.01}Mn_{0.04}(OH)₂, lithium hydroxide monohydrate, nanoscale zirconium oxide, and cobalt hydroxide were introduced into a high-speed blender according to a molar ratio of 1:1.07:0.002:0.02, and stirred at a rotating speed of 1800 r/min for 30 minutes. Subsequently, in a box furnace with an oxygen gas concentration greater than or equal to 96%, the mixed material was heated to 900 °C at a heating rate of 3 °C/min and held for 2 hours, and then cooled to 786 °C and held for 12 hours, followed by natural cooling to room temperature, obtaining a sintered material.
2) The sintered material was initially crushed through a jaw crusher and a double roll crusher in sequence, and then pulverized through a jet mill at an air pressure of 0.35 MPa, a sorting frequency of 45 Hz, and an air-intake frequency of 40 Hz, which can effectively fully dissociate the sintered aggregated particles and control the particle size.

The pulverized material, boric acid, and aluminum oxide were introduced into a high-speed blender according to a molar ratio of 1:0.0005:0.001, and stirred at a rotating speed of 1800 r/min for 30 minutes. Subsequently, in a box furnace under an oxygen atmosphere, the mixed material was heated to 320 °C at a heating rate of 3 °C/min and held for 8 hours, followed by natural cooling to room temperature to obtain a sintered product. The sintered product was sieved using a 300-mesh screen to obtain a ternary positive electrode material.

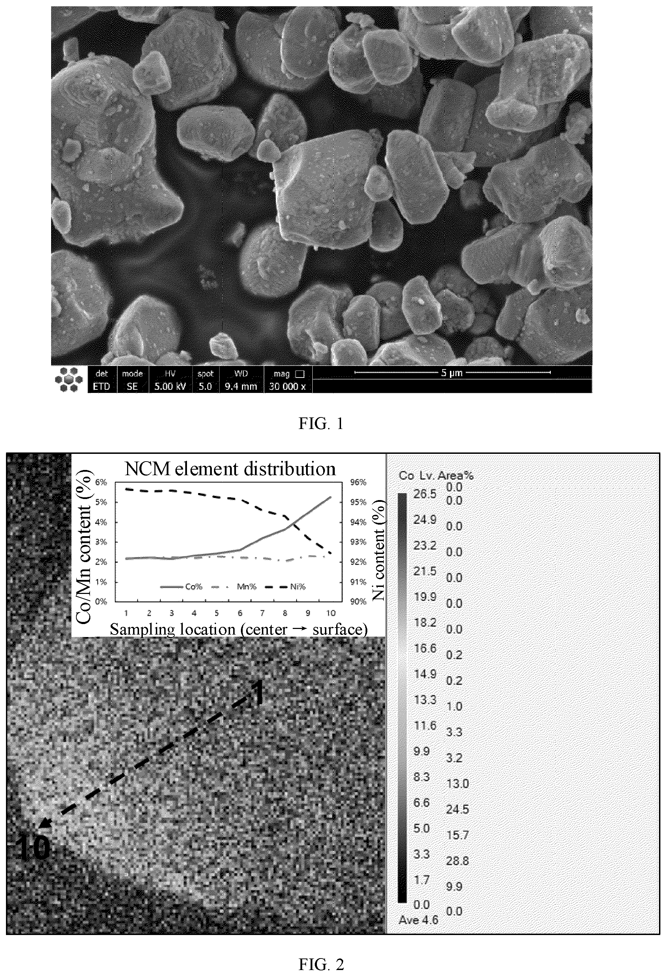

The SEM image and EPMA mapping of the above ternary positive electrode material are shown in FIGS. 1 to 2. It can be seen from the EMPA element distribution mapping that a two-tier decreasing cobalt concentration gradient distribution is formed from the outside to the inside. In the first region extending from 25 nm to 425 nm away from the particle surface, the cobalt concentration is in a gradient distribution, decreasing towards the center at a rate of 12.37% per 100 nm. In the second region extending from 425 nm away from the particle surface to the center of the particle, the cobalt concentration is in a gradient distribution, decreasing towards the center at a rate of 3.18% per 100 nm. A ratio of the decreasing rate of the cobalt concentration in the first region to that in the second region is 3.89. These features ensure rapid intercalation and deintercalation of lithium ions, while stabilizing the lattice structure of the material and alleviating the irreversible H1-M (low voltage dynamics) and H2-H3 phase transitions in the high-nickel low-cobalt material, thereby increasing the capacity of the material, enhancing the mechanical strength of the material, and improving the cycling performance of the material.

### Example 2

A low-cobalt single crystal positive electrode material with high capacity and long cycle life was prepared, which is represented by a chemical formula Li_{1.0}Ni_{0.928}Co_{0.030}Mn_{0.040}Al_{0.004}B_{0.0005}O₂, and consists of small single-crystal primary particles, where the D50 particle size is 3.5 µm, the crystal particle size of the primary particles is 1.7 µm, the specific surface area is 0.59 m²/g, the total residual lithium content is 1312 ppm, the full width at half maximum of the XRD diffraction peak 014 is 0.085, and the lithium-nickel mixing obtained from XRD refinement is 1.87%.

The preparation method included the following steps:
1) The purchased nickel-cobalt-manganese hydroxide precursor Ni_{0.95}Co_{0.01}Mn_{0.04}(OH)₂, lithium hydroxide monohydrate, aluminum oxide and cobalt hydroxide were introduced into a high-speed blender according to a molar ratio of 1:1.07:0.001:0.02, and stirred at a rotating speed of 1800 r/min for 30 minutes. Subsequently, in a box furnace with an oxygen gas concentration greater than or equal to 96%, the mixed material was heated to 900 °C at a heating rate of 3 °C/min and held for 2 hours, and then cooled to 786 °C and held for 12 hours, followed by natural cooling to room temperature, obtaining a sintered material.
2) The sintered material was initially crushed through a jaw crusher and a double roll crusher in sequence, and then pulverized through a jet mill at an air pressure of 0.35 MPa, a sorting frequency of 45 Hz, and an air-intake frequency of 40 Hz, which can effectively fully dissociate the sintered aggregated particles and control the particle size.

The pulverized material, boric acid, and aluminum oxide were introduced into a high-speed blender according to a molar ratio of 1:0.0005:0.001, and stirred at a rotating speed of 1800 r/min for 30 minutes. Subsequently, in a box furnace under an oxygen atmosphere, the mixed material was heated to 320 °C at a heating rate of 3 °C/min and held for 8 hours, followed by natural cooling to room temperature to obtain a sintered product. The sintered product was sieved using a 300-mesh screen to obtain a ternary positive electrode material.

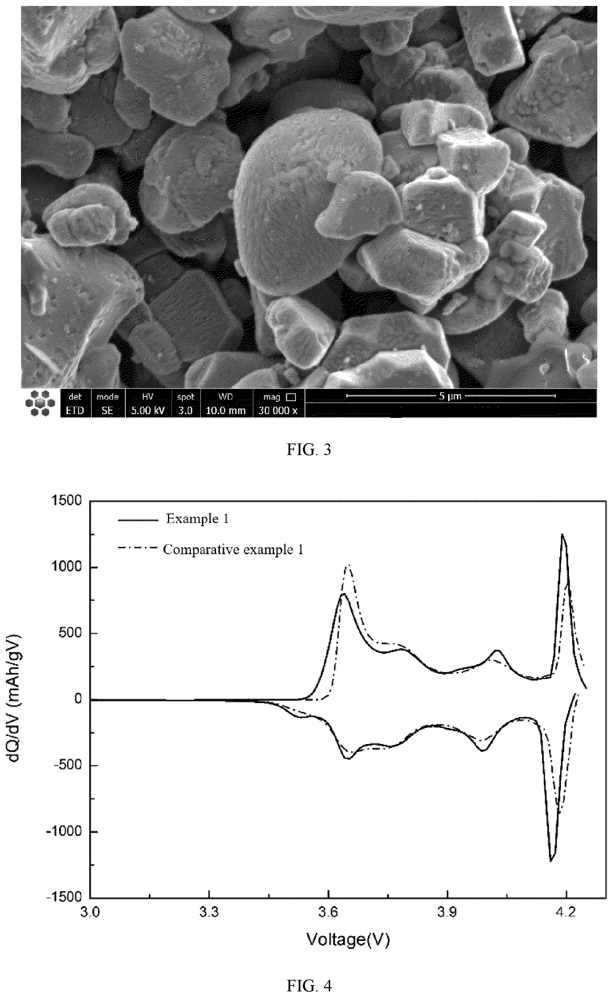

The SEM image of the above ternary positive electrode material is shown in FIG. 3.

### Example 3

A low-cobalt single crystal positive electrode material with high capacity and long cycle life was prepared, which is represented by a chemical formula Li_{1.0}Ni_{0.929}Co_{0.030}Mn_{0.039}Zr_{0.002}W_{0.0015}O₂, and consists of small single-crystal primary particles, where the single crystal show a wavy-shaped morphology, the D50 particle size is 3.8 µm, the crystal particle size of the primary particles is 1.7 µm, the specific surface area is 0.64 m²/g, the total residual lithium content is 1385 ppm, the full width at half maximum of the XRD diffraction peak 014 is 0.084, and the lithium-nickel mixing obtained from XRD refinement is 1.94%.

The preparation method included the following steps:
1) The purchased nickel-cobalt-manganese hydroxide precursor Ni_{0.95}Co_{0.01}Mn_{0.04}(OH)₂, lithium hydroxide monohydrate, nanoscale zirconium oxide, and cobalt hydroxide were introduced into a high-speed blender according to a molar ratio of 1:1.07:0.002:0.02, and stirred at a rotating speed of 1800 r/min for 30 minutes. Subsequently, in a box furnace with an oxygen gas concentration greater than or equal to 96%, the mixed material was heated to 900 °C at a heating rate of 3 °C/min and held for 2 hours, and then cooled to 786 °C and held for 12 hours, followed by natural cooling to room temperature, obtaining a sintered material.
2) The sintered material was initially crushed through a jaw crusher and a double roll crusher in sequence, and then pulverized through a jet mill at an air pressure of 0.35 MPa, a sorting frequency of 45 Hz, and an air-intake frequency of 40 Hz, which can effectively fully dissociate the sintered aggregated particles and control the particle size.

The pulverized material and tungsten oxide were introduced into a high-speed blender according to a molar ratio of 1:0.0015, and stirred at a rotating speed of 1800 r/min for 30 minutes. Subsequently, in a box furnace under an oxygen atmosphere, the mixed material was heated to 450 °C at a heating rate of 3 °C/min and held for 8 hours, followed by natural cooling to room temperature to obtain a sintered product. The sintered product was sieved using a 300-mesh screen to obtain a ternary positive electrode material.

### Comparative Example 1

A low-cobalt single crystal positive electrode material was prepared, which is represented by a chemical formula Li_{1.0}Ni_{0.948}Co_{0.01}Mn_{0.04}Zr_{0.002}O₂, and consists of small single-crystal primary particles, where the D50 particle size is 3.7 µm, the crystal particle size of the primary particles is 1.7 µm, the specific surface area is 0.71 m²/g, the total residual lithium content is 3278 ppm, the full width at half maximum of the XRD diffraction peak 014 is 0.114, and the lithium-nickel mixing obtained from XRD refinement is 3.12%. Compared to the examples, this material exhibits lower crystallinity and more severe lithium-nickel mixing.

The preparation method included the following steps:
1) The purchased nickel-cobalt-manganese hydroxide precursor Ni_{0.95}Co_{0.01}Mn_{0.04}(OH)₂, lithium hydroxide monohydrate, and nanoscale zirconium oxide were introduced into a high-speed blender according to a molar ratio of 1:1.07:0.002, and stirred at a rotating speed of 1800 r/min for 30 minutes. Subsequently, in a box furnace with an oxygen gas concentration greater than or equal to 96%, the mixed material was heated to 786 °C at a rate of 3 °C/min and held for 12 hours, followed by natural cooling to room temperature, obtaining a sintered material.
2) The sintered material was initially crushed through a jaw crusher and a double roll crusher in sequence, and then pulverized through a jet mill at an air pressure of 0.35 MPa, a sorting frequency of 45 Hz, and an air-intake frequency of 40 Hz, which can effectively fully dissociate the sintered aggregated particles and control the particle size.

The pulverized material was sieved using a 300-mesh screen to obtain a ternary positive electrode material.

FIG. 4 shows a graph of the dQ/dV curves at 0.1 C rate of the positive electrode materials prepared in Example 1 and Comparative Example 1. It can be seen from the figure that the reduction peaks of Comparative Example 1 are overall shorter, and there is no reduction peak around 3.5 V, the polarization is greater, and the discharge capacity is lower. In contrast, the reduction peaks of Example 1 are overall higher, especially the H2-H3 phase transition peak around 4.2 V and the H1-M reduction peak around 3.5 V, indicating that through the two-tier decreasing cobalt concentration gradient design, Example 1 alleviates the irreversible H1-M and H2-H3 phase transitions and has higher specific capacity.

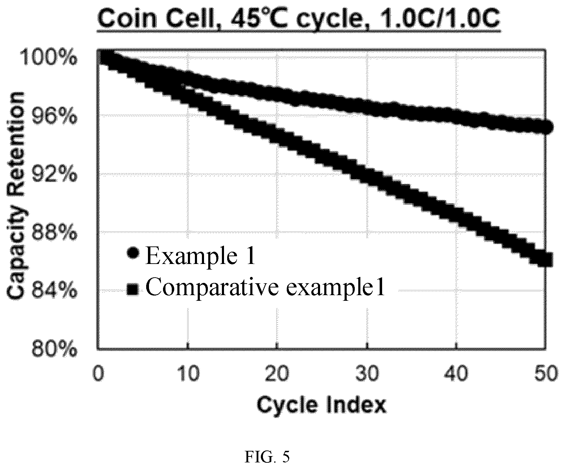

FIG. 5 shows a graph of high-temperature cycling performance of the positive electrode materials prepared in Example 1 and Comparative Example 1. It can be seen from the figure that through the two-tier decreasing cobalt concentration gradient and the coating layer, Example 1 shows significantly better high-temperature cycling performance than Comparative Example 1.

### Comparative Example 2

A low-cobalt single crystal positive electrode material was prepared, which is represented by a chemical formula Li_{0.99}Ni_{0.948}Co_{0.01}Mn_{0.04}Zr_{0.002}B_{0.0005}Al_{0.002}O₂, and consists of small single-crystal primary particles, where the D50 particle size is 4.2 µm, the crystal particle size of the primary particles is 1.7 µm, the specific surface area is 0.49 m²/g, the total residual lithium content is 2545 ppm, the full width at half maximum of the XRD diffraction peak 014 is 0.109, and the lithium-nickel mixing obtained from XRD refinement is 2.97%. Compared to the examples, this material exhibits lower crystallinity and more severe lithium-nickel mixing.

The preparation method included the following steps:
1) The purchased nickel-cobalt-manganese hydroxide precursor Ni_{0.95}Co_{0.01}Mn_{0.04}(OH)₂, lithium hydroxide monohydrate, and nanoscale zirconium oxide were introduced into a high-speed blender according to a molar ratio of 1:1.07:0.002, and stirred at a rotating speed of 1800 r/min for 30 minutes. Subsequently, in a box furnace with an oxygen gas concentration greater than or equal to 96%, the mixed material was heated to 786 °C at a rate of 3 °C/min and held for 12 hours, followed by natural cooling to room temperature, obtaining a sintered material.
2) The sintered material was initially crushed through a jaw crusher and a double roll crusher in sequence, and then pulverized through a jet mill at an air pressure of 0.35 MPa, a sorting frequency of 45 Hz, and an air-intake frequency of 40 Hz, which can effectively fully dissociate the sintered aggregated particles and control the particle size.

The pulverized material, boric acid, and aluminum oxide were introduced into a high-speed blender according to a molar ratio of 1:0.0005:0.001, and stirred at a rotating speed of 1800 r/min for 30 minutes. Subsequently, in a box furnace under an oxygen atmosphere, the mixed material was heated to 320 °C at a heating rate of 3 °C/min and held for 8 hours, followed by natural cooling to room temperature to obtain a sintered product. The sintered product was sieved using a 300-mesh screen to obtain a ternary positive electrode material.

### Performance testing:

The electrochemical performance of the positive electrode materials in the above examples and comparative examples were analyzed using CR2032 coin cells, and the test method was as follows:

Positive electrode plate: Each positive electrode material from Examples 1 and 2 and Comparative Examples 1 and 2, conductive carbon black (SP), and polyvinylidene fluoride (PVDF) were mixed at a mass ratio of 92.5:5:2.5, stirred and dispersed with NMP solvent, coated onto an aluminum foil, and then rolled to obtain a positive electrode plate.

Negative electrode plate: lithium metal sheet.

Electrolyte: 1 mol/L LiPF₆ solution, where the solvent is a mixture of EC and DMC at a ratio of 1:2, with an additive of 1% VC.

The CR2032 coin cells were assembled for cell testing at a charge cut-off voltage of 4.25 V and a discharge cut-off voltage of 3.0 V.

The test results of the electrical performance of the positive electrode materials prepared in Examples 1 to 3 and Comparative Examples 1 to 2 are as follows. The test results of the electrical performance are shown in Table 1.

**Table 1. The test results of the electrical performance of the positive electrode materials**

| Croup | Initial coulombic efficiency (%) | 0.1C discharge capacity (mAh/g) | 1C discharge capacity (mAh/g) | Rate (%) | 45°C capacity retention rate after 50 cycles (%) | 45°C DCR growth rate after 50 cycles (%) |
|---|---|---|---|---|---|---|
| Example 1 | 88.2 | 217.0 | 201.0 | 94.2 | 95.2 | 7.7 |
| Example 2 | 88.3 | 217.2 | 200.8 | 94.0 | 95.7 | 9.6 |
| Example 3 | 88.5 | 216.9 | 200.7 | 94.0 | 94.8 | 9.4 |
| Comparative Example 1 | 83.7 | 201.9 | 186.2 | 89.0 | 86.1 | 91.2 |
| Comparative Example 2 | 83.9 | 203.2 | 187.4 | 91.5 | 86.9 | 82.2 |

As can be seen from Table 1, the low-cobalt single crystal positive electrode materials in Examples 1 to 3 can be prepared through a simple method, which significantly improves the initial charge/discharge capacity and rate performance, and can significantly enhance the high-temperature cycling performance, largely addressing the common issues associated with low-cobalt high-nickel materials in the industry, such as high residual lithium content, poor rate performance and cycling performance. In contrast, Comparative Examples 1 and 2 do not adopt the doping, coating modification and two-stage high-temperature sintering processes of the present application. Consequently, the cobalt concentration does not has a gradient distribution within the obtained materials, and the residual lithium content on the surface is relatively high, leading to a relatively high polarization resistance, low capacity, and poor rate and cycling performance. The overall electrochemical performance is inferior to that of the examples.

Through appropriate selection of small particles of high-nickel low-cobalt precursors, combined with element doping, coating modification, and dry sintering processes, the present application can regulate the internal nickel-cobalt-manganese composition, particle size morphology, and structure of the ternary positive electrode material, and modify the crystal structure and the surface material, resulting in a two-tier decreasing cobalt concentration gradient distribution from the outside to the inside, which addresses the common issues of high-nickel low-cobalt positive electrode materials, such as high residual lithium content, poor power performance and cycling performance. The method alleviates the irreversible H1-M (low-voltage dynamics) and H2-H3 phase transitions in the high-nickel low-cobalt material and enhances mechanical strength of the material. The resulting material maintains high capacity and long cycle life while demonstrating excellent power performance and stable crystal structure, leading to high safety, high capacity, and long cycle life of batteries, meeting the safety and high-performance requirements of long-range premium vehicle models. Additionally, the resulting material offers a significant advantage in comprehensive cost, making it particularly suitable for being used in automotive batteries for long-range EV.

## Claims

1. A low-cobalt single crystal positive electrode material with high capacity and long cycle life, wherein through EPMA analysis of a particle of the low-cobalt single crystal positive electrode material, a region extending from 25 nm to 425 nm away from a particle surface is defined as a first region, and a region extending from 425 nm away from the particle surface to a particle center is defined as a second region;
wherein a cobalt concentration of the first region is in a gradient distribution, decreasing from outside to inside at a rate of 6% to 20% per 100 nm, and
a cobalt concentration of the second region is in a gradient distribution, decreasing from outside to inside at a rate of 0.1% to 6% per 100 nm.

2. The low-cobalt single crystal positive electrode material according to claim 1, wherein a ratio of a cobalt concentration decreasing rate in the first region to that in the second region is in a range from 3:1 to 8:1.

3. The low-cobalt single crystal positive electrode material according to claim 1, wherein the low-cobalt single crystal positive electrode material is represented by a general formula LiᵤNi_{1-x-y-z}CoₓMn_{y}M_{z}NᵥO_{2-w}, where 0.9≤u≤1.1, 0<x≤0.10, 0<y≤0.1, 0≤z≤0.05, 0≤v≤0.05, -0.05≤w≤0.05, M is a doping element selected from the group consisting of Al, Mg, Zr, Ti, Y, W, Ta, Nb, Ce, Sn, B, Sr, Mo, and any combination thereof, and N is a coating element selected from the group consisting of B, Ce, Nb, Sn, W, Al, Zr, and any combination thereof.

4. The low-cobalt single crystal positive electrode material according to claim 1, wherein in an XRD diffraction pattern of the low-cobalt single crystal positive electrode material, a full width at half maximum of peak 104 is in a range from 0.08 to 0.10, and a lithium-nickel mixing obtained from refinement against the XRD diffraction pattern is in a range from 1.8% to 2.5%.

5. The low-cobalt single crystal positive electrode material according to claim 1, having a D50 particle size ranged from 3.0 µm to 4.0 µm, a crystal particle size of primary particles ranged from 1.5 µm to 2.0 µm, a specific surface area ranged from 0.4 m²/g to 0.8 m²/g, and a total residual lithium content ranged from 800 ppm to 1400 ppm.

6. The low-cobalt single crystal positive electrode material according to any one of claims 1 to 5, wherein a dQ/dV discharge curve of the low-cobalt single crystal positive electrode material at 0.1 C rate comprises a raised reduction peak at 3.4 V to 3.6 V.

7. A method for preparing the low-cobalt single crystal positive electrode material according to any one of claims 1 to 6, comprising following steps:
S1: uniformly mixing a nickel-based hydroxide precursor, a lithium salt, a cobalt source, and a dopant, and performing two-stage sintering, wherein temperature of the first stage sintering is higher than temperature of the second stage sintering; and
S2: pulverizing and dissociating a sintered product obtained from the two-stage sintering in step S1, then uniformly mixing with a coating agent, and performing additional sintering to obtain the low-cobalt single crystal positive electrode material.

8. The method according to claim 7, wherein the lithium salt is one or two selected from the group consisting of lithium carbonate, lithium hydroxide, lithium nitrate, lithium fluoride, and lithium phosphate; the cobalt source is one or two selected from the group consisting of cobalt hydroxide, cobalt oxyhydroxide, and tricobalt tetroxide; the dopant is an M salt, which is a compound containing one or multiple elements selected from the group consisting of Al, Mg, Zr, Ti, Y, W, Ta, Nb, Ce, Sn, B, Sr, and Mo; the coating agent is an N salt, which is a compound containing one or multiple elements selected from the group consisting of B, Ce, Nb, Sn, W, Al, and Zr; and a molar ratio of element lithium in the lithium salt to the nickel-cobalt-manganese hydroxide precursor is in a range from 1.05:1 to 1.08:1.

9. The method according to claim 7, wherein in step S1, the two-stage sintering are performed at following conditions: the first stage sintering is performed at a temperature in a range from 800 °C to 1000 °C at a heating rate in a range from 1 °C/min to 3 °C/min for a temperature-holding period in a range from 2 hours to 5 hours; the second stage sintering is performed at a temperature in a range from 600 °C to 800 °C for a temperature-holding period in a range from 8 hours to 20 hours; and the two-stage sintering is performed in an oxygen-containing atmosphere;
in step S2, the additional sintering is performed at a temperature in a range from 200 °C to 700 °C at a heating rate in a range from 1 °C/min to 3 °C/min for a temperature-holding period in a range from 4 hours to 10 hours, and the additional sintering is performed in an oxygen-containing atmosphere.

10. The method according to any one of claims 7 to 9, wherein pulverizing and dissociating in step S2 specifically comprises following steps: initially crushing the sintered product with a jaw crusher and a double roll crusher in sequence, and then pulverizing with a jet mill at an air pressure ranged from 0.2 MPa to 0.4 MPa, a sorting frequency ranged from 30 Hz to 50 Hz, and an air-intake frequency ranged from 30 Hz to 50 Hz.
